**Europäisches Patentamt**

**European Patent Office**

**Office européen des brevets**

(19)

(11) Veröffentlichungsnummer: **0 111 941**
**B1**

(12)

# EUROPÄISCHE PATENTSCHRIFT

(45) Veröffentlichungstag der Patentschrift:
**16.08.89**

(51) Int. Cl.⁴: **B 01 D 3/22**, B 01 D 53/18

(21) Anmeldenummer: **83113026.5**

(22) Anmeldetag: **23.12.83**

(54) Boden für Destillier- und/oder Absorptionskolonnen.

(30) Priorität: **23.12.82 HU 415182**

(43) Veröffentlichungstag der Anmeldung:
**27.06.84 Patentblatt 84/26**

(45) Bekanntmachung des Hinweises auf die Patenterteilung:
**16.08.89 Patentblatt 89/33**

(84) Benannte Vertragsstaaten:
**AT BE CH DE FR GB IT LI LU NL SE**

(56) Entgegenhaltungen:
**DE-A- 2 015 213**
**DE-A- 2 260 867**
**DE-B- 1 241 805**
**US-A- 1 442 414**
**US-A- 4 275 021**

(73) Patentinhaber: **INNO-FINANCE Altalános Innovácios Pénzintézet, Szabadság tér 5-6, H-1054 Budapest V (HU)**

(72) Erfinder: **Gyökhegyi, László, Dr. Chem.-Ing., Mányoki ut 5, H-1118 Budapest (HU)**
Erfinder: **Boronyák, Imre, Dr. Masch. Ing., Sallai u. 30/b, H-1136 Budapest (HU)**

(74) Vertreter: **Beszédes, Stephan G., Dr. Patentanwalt, Münchener Strasse 80a Postfach 1168, D-8060 Dachau (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Boden für Destillier- und/oder Absorptionskolonnen, in dessen mit einem Zu- und gegebenenfalls Ablaufwehr versehener Bodenplatte sich durchgehende Löcher befinden.

Es sind viele Arten von Destillier- und/oder Absorptionskolonnen bekannt. Unter diesen sind die Bodenkolonnen am weitesten verbreitet. Das Ziel der Böden ist es, den in der Kolonne aufwärts strömenden Dampf und/oder das Gas mit der von oben nach unten fließenden Flüssigkeit in innige Berührung zu bringen. Man unterscheidet voneinander Böden mit und ohne Ablauf; die ersteren werden je nach den Konstruktionselementen, die zur Berührung beider Phasen dienen (Glocken, Ventile, Löcher), im allgemeinen als Glocken-, Ventil- und Siebböden genannt; wobei auch die Kombination der letzgenannten beiden Bodenbauarten vorkommt.

Die modernen Siebböden können – hinsichtlich der Hauptströmungsrichtung der Flüssigkeit – ein- oder mehrflutige Querstrom-, oder Zentrifugalböden sein, auf deren Bodenplatten sich – senkrecht zur Plattenebene – kreisförmige, gebohrte, oder gestanzte Löcher mit dem Durchmesser von 10–15 mm in den Eckpunkten von Vier-, oder Dreiecken befinden, während der Abstand zwischen den Mittelpunkten der Löcher 20–45 mm beträgt.

Die modernen Siebböden können (genau so, wie auch die anderen Bodenbauarten) nach verfahrenstechnischen und betriebstechnischen Gesichtspunkten sowie nach dem Kostenaufwand bewertet werden. Heute besteht noch nicht die Möglichkeit, alle drei Faktoren gleichzeitig zahlenmäßig zu berücksichtigen. Deshalb können die Siebböden durch eine objektive Größe nicht gekennzeichnet werden. So kann man die oben genannten Faktoren jeweils als eine Einzelgröße in Betracht ziehen und mit den entsprechenden Daten anderer Böden vergleichen.

Die verfahrenstechnische Bewertung erstreckt sich – bei einer vorgegebenen Konstruktion, bei einem Gemisch und/oder bei festgelegter Gas- und Flüssigkeitszusammensetzung, bei konstantem Dampf- und/oder Gas-, sowie Flüssigkeitsdurchsatz ($m^3$/h) – auf den in der Industriepraxis in Frage kommenden Bereich der auf den ganzen Bodenquerschnitt bezogenen Dampf- und/oder Gasgeschwindigkeit, auf den hydraulischen Widerstand des arbeitenden Bodens (Druckverlust); ferner auf den Bodenwirkungsgrad in dem in der Industriepraxis in Frage kommenden Bereich der Dampf- und/oder Gasgeschwindigkeit. Die soeben angeführten drei Größen sind von einander nicht unabhängig, weil der durch die Böden hervorgerufene Druckverlust sowie der Bodenwirkungsgrad von der Dampf- und/oder Gasgeschwindigkeit abhängen. Unter dem Bodenwirkungsgrad wird das Verhältnis der effektiv erzielten Trennung zu derjenigen Trennung verstanden, die erreicht werden könnte, wenn auf dem Boden ein thermodynamisches Gleichgewicht bestehen würde.

Unter Trennung läßt sich das Ergebnis eines Destillations-, bzw. Absorptionsvorganges verstehen; durch eine Destillation wird z.B. eine Flüssigkeit von einer anderen Flüssigkeit, beispielsweise Alkohol vom Wasser getrennt; durch eine Absorption wird aus einem Gasgemisch die eine Komponente dadurch separiert, daß diese in einer Flüssigkeit, beispielsweise $CO_2$ in Wasser, gelöst wird.

Da die Siebböden aus verfahrenstechnischem Gesichtspunkt her nur einige beeinflussende Konstruktionsmaße (Bodendurchmesser, Länge und Höhe des Ablaufwehrs, Lochdurchmesser, Lochteilung, Stärke der Bodenplatte) aufweisen, läßt sich der jeweilige Einfluß dieser Maße auf die Dampfgeschwindigkeit, den Druckverlust sowie den Wirkungsgrad vereinzelt untersuchen. Es soll vorangeschickt werden, daß das Verhältnis aus dem Bodendurchmesser und aus der Wehrlänge bei einem einflutigen Querstromboden im allgemeinen 0,6–0,7, bei zweiflutigen Böden dagegen 0,5–0,6 beträgt. Die Ablaufwehrhöhe ist bei modernen Konstruktionen max. 20 mm, weil ein höheres Ablaufwehr nur einen größeren hydraulischen Widerstand des Bodens (Druckverlust) zur Folge hat. Dieses Konstruktionsprinzip basiert auf dem durch Versuche bewiesenen Tatbestand, daß ein großer Teil des Stoffaustausches zwischen dem Dampf und/oder Gas sowie der Flüssigkeit größtenteils an der Berührungsstelle beider Phasen momentan vor sich geht. Deshalb bedarf weder der Dampf, bzw. das Gas, noch die Flüssigkeit einer großen Weglänge.

Der optimale Teilungsfaktor (das dimensionslose Verhältnis aus dem Abstand zwischen den Lochmittelpunkten und dem Lochdurchmesser) beträgt, wie durch Versuche (Chemie Ing. Technik., 34,/1962./Nr. 4 S. 290.) bewiesen, etwa 2,8. Bei einer engeren Teilung wird der Bodenwirkungsgrad kleiner, da sich die durch die einander zu nahe liegenden, verhältnismäßig großen Löcher hindurch steigenden Dampf- und/oder Gasströme miteinander in große Blasen vereinigen, wodurch der Stoffaustausch, bzw. der Wirkungsgrad ungünstigerweise beeinflußt wird. Obwohl die Anzahl und der Gesamtquerschnitt der auf einen Boden anzubringenden Löcher durch eine engere Lochteilung vergrößert werden könnte, wodurch ein niedrigerer Druckverlust herbeigeführt würde, wird die oben erwähnte Wirkungsgradabnahme dadurch im allgemeinen nicht gedämpft. Die Vergrößerung des Teilungsfaktors über das Optimum (2,8) hinaus führt demgegenüber zu einem erhöhten Druckverlust und gleichzeitig wieder zu einem schlechteren Wirkungsgrad, weil eine bedeutende Menge solcher Flüssigkeit zwischen den in zu großen Abständen angesetzten Löchern zurückbleibt, die mit dem aufsteigenden Dampf und/oder Gas primär nicht in Berührung kommt.

Die wichtigsten drei Forderungen zur Beurteilung betriebstechnischer Fragen sind folgende: keine Verstopfung der Löcher; kein Durchregnen der Flüssigkeit durch die Löcher hindurch in Gegenstrom mit dem Dampf und/oder Gas; ein breiter Belastungsbereich des Siebbodens bei konstantem Wirkungsgrad.

Die Vergrößerung der Dampf- und/oder Gasgeschwindigkeit führt nämlich zur Produktionserhöhung (z.B. zu einer großen Destilatmenge), wobei eine Produktionsabnahme durch eine herabgesetzte Dampf- und/oder Gasgeschwindigkeit erzielt wird.

Das Durchregnen der Flüssigkeit durch die Löcher eines Siebbodens hindurch erfolgt bei niedrigen Dampf- und/oder Gasgeschwindigkeiten, bei denen der Flüssigkeitsinhalt des Bodens durch die kinetische Energie des emporströmenden Dampfes und/oder Gases nicht aufrechterhalten bleibt. Durch Aufhören dieses Durchregnens wird die untere dampf- und/oder gasseitige Belastungsgrenze eines Siebbodens gelegt. Von dort ab bleibt der Wirkungsgrad eines modernen Siebbodens konstant, wobei der Druckverlust ständig ansteigt.

Der bereits erwähnte, größte betriebstechnische Vorteil moderner Siebböden ist erstens die Konstanthaltung des Bodenwirkungsgrades in einem breiten Belastungsbereich, zweitens die Tatsache, daß sich die Löcher verhältnismäßig großen Durchmessers nicht verstopfen. Nachteilig wirkt sich aus, daß die einem Boden zufließende klare, schaumfreie Flüssigkeit eine größere Dichte aufweist, als die auf einer anderen Stelle des Bodens befindliche, durch Dampf- und/oder Gas bereits durchströmte Flüssigkeit. Infolgedessen erfährt man ein stärkeres Durchregnen in der Nähe des Flüssigkeitszulaufes, als in weiteren Stellen des Bodens, weil der hydrostatische Druck der schaumfreien Flüssigkeit niedriger ist, als der einer Flüssigkeit mit Schaum. Um dem Durchregnen entgegenzutreten, wird die Bodenplatte nach einem bekannten Konstruktionsprinzip in der Seite des Zulaufes schräg ausgeführt, oder es wird der ganze Boden in Richtung der Flüssigkeitshauptströmung in Schrägstellung eingebaut. Durch derartige Konstruktionsmaßnahmen wird der Preis der Siebböden – selbstverständlich ungünstigerweise – beeinflusst.

Der auf modernen Siebböden zu erreichende Dampf- und/oder Gasbelastungsbereich kann – wegen der komplizierten Wechselbeziehungen – nur auf empirischem Wege erfaßt werden. Infolge der niedrigen Anzahl der beeinflussenden Konstruktionsmaße sowie ihrer verhältnismäßigen Einfachheit gehören die modernen Siebböden mit zu den billigsten Bodenbauarten. Dabei verhalten sie sich – im Vergleich mit den wesentlich teureren Ventil-, bzw. Ventil-Siebböden – verfahrenstechnisch ausschließlich in dem höheren Dampf- und/oder Gasbelastungsbereich ungünstiger; die Siebböden werden also nur mit zunehmendem Druckverlust unvorteilhaft.

Betriebstechnisch gesehen schneiden die Siebböden besser ab, als die aus beweglichen Teilen gebauten Ventil- bzw. Ventil-Siebböden, da die beweglichen Ventile einem Verschleiß unterworfen sind, während ihre Betriebssicherheit durch Blockierung gefährdet wird.

Man versuchte den hydraulischen Widerstand (Druckverlust) der Siebböden dadurch herabzusetzen, daß – anstelle des Bohrens oder Ausstanzens von scharfkantigen Löchern – sogenannte, aus der Bodenplatte aufwärts hinaufragende Dampfhälse gebördelt wurden, wodurch der von unten nach oben steigende Dampf- und/oder Gasstrom durch einen abgerundeten Eintritt in die Bodenflüssigkeit gelangt. Somit wird der hydraulische Widerstand eines Siebbodens – nach den durchgeführten Untersuchungen – bedingt durch den Abrundungswinkel des Dampf- und/oder Gaseintrittes durchschnittlich um etwa 30% herabgesetzt.

Nach Beobachtungen und Messungen bleibt das Flüssigkeitsniveau auf einem Siebboden nicht konstant, es fällt infolge der Flüssigkeitsreibung vom Zulaufwehr bis zum Ablaufwehr hin ab. Die Niveaudifferenz ist besonders bei Siebböden mit großer Flüssigkeitsbelastung von Bedeutung: sie kann, bezogen auf 1 m Bodenbreite, sogar 15 mm ausmachen. Die Folge dieses sogenannten hydraulischen Gradienten besteht nun darin, daß mehr Dampf und/oder Gas in der Nähe des Ablaufes – also dort, wo ein niedrigeres Flüssigkeitsniveau herrscht – durch den Siebboden hindurchströmt, als in der Umgebung des Zulaufes. Dadurch arbeitet der Siebboden ungleichmäßig, womit sich der Wirkungsgrad des ganzen Siebbodens verschlechtert.

Um den hydraulischen Gradienten zu beseitigen, werden – laut einer bekannten Konstruktion – gerade Schlitze zwischen die Lochreihen gerissen, die man durch Pressen erweitert. Der durch die Schlitze in Richtung des Ablaufes zur Bodenplattenebene schräg austretende Dampf- und/oder Gasstrom überträgt hinreichende Impulsmenge an die Flüssigkeit zur Überwindung der Flüssigkeitsreibung, wodurch der hydraulische Gradient praktisch nicht mehr auftritt. Durch diese, ziemlich einfache Konstruktionsänderung, wodurch auch der eventuellen Rückvermischung der Flüssigkeit in Richtung des Zulaufes entgegengewirkt wird, nimmt der Wirkungsgrad solcher geschlitzter Siebböden bedeutend zu ohne einen merklichen Anstieg des hydraulischen Widerstandes (Druckverlustes).

Als eine Weiterentwicklung des Siebbodens können auch die Streckmetallböden betrachtet werden, deren aktive Bodenflächen (aktive Bodenfläche = Gesamtbodenfläche – Zu- und Ablauffläche) aus Streckmetallsegmenten zusammengebaut sind. Die Öffnungen der aufeinanderpassenden angrenzenden Streckmetallsegmente weisen unterschiedliche Richtungen auf. Die Öffnungen der beschriebenen Segmente sind also verschiedenartig orientiert. Die z.B. 42 × 5 mm großen Öffnungen in Rhomboid-Form sollten den von unten nach oben hindurchsteigenden Dampf- und/oder Gasstrom schräg ablenken. Da aber die Schrägen der Rhomboid-Öffnungen bedingt durch die Herstellungstechnologie des Streckmetalls nicht uneingeschränkt sind, während ihre Maße im Vergleich zu den Lochdurchmessern moderner Siebböden (10–15 mm) wesentlich größer sind und die Stege, durch die die Rhomboid-Öffnungen getrennt werden, im allgemeinen geringe Wandstärken (2–3 mm) aufweisen, wird nur ein Teil des von unten nach oben steigenden Dampf- und/oder Gasstromes gezwungen, schiefwinkelig hindurchzuströmen. Aus denselben Gründen vereinigen sich die in einem zu kurzen Abstand voneinader gebildeten Dampf- und/oder Gasströme leicht in große Blasen (Koaleszenz). Darauf wird der niedrigere Wirkungsgrad der Streckmetallböden gegenüber dem gut konstruierter Siebböden zurückgeführt. Gleichzeitig zeigt der hydraulische Widerstand der Streckmetallböden – trotz des durch die großen Öffnungsmaße bedingten, freien Strömungsquerschnittes – wegen des hohen Dampf- und/oder Gasdurchsatzes im Bereich des schlechthin erreichbaren Wirkungsgrades einen höheren Wert, als der eines Siebbodens bei gleichem, oder einem höheren Wirkungsgrad. Auch der durch den größeren Druckverlust bedingte zunehmende Energiebedarf wirkt sich nachteilig aus.

Einen zusätzlichen Nachteil haben die Streckmetallböden dadurch, daß das Durchregnen der Flüssigkeit durch die großen freien Öffnungen hindurch nur durch eine größere Dampf- und/oder Gasgeschwindigkeit beseitigt werden kann, als im Falle moderner Siebböden. Deshalb zeigen die Streckmetallböden eine besondere Empfindlichkeit gegen Belastungsänderungen, bzw. Belastungsschwankungen.

Verfahrenstechnisch gesehen sind noch zwei Nachteile der Streckmetallböden zu erwähnen. Erstens tritt in der Kolonne durch Wärmeeinwirkung eine Deformation der Böden auf, wodurch noch größere Öffnungsmaße entstehen können. Zweitens bleibt der Wirkungsgrad – unter vergleichbaren Bedingungen – wesentlich unter dem z.B. von Ventilböden.

Aus Vorstehendem folgt, daß der Streckmetallboden verfahrenstechnisch keine allgemeingültige Entwicklung darstellt. Bezüglich betriebstechnischer Fragen neigen die großen Öffnungen des Streckmetalls wegen ihrer schrägen Orientierung nicht zum Verstopfen. Auch der Preis der Streckmetallböden ist günstig. Trotzdem bleiben sie infolge des niedrigen Wirkungsgrades sowie des engen Arbeitsbereiches hinter den modernen Siebböden zurück. Es kann also festgestellt werden, daß die sogenannten Schlitz-Siebböden den Wirkungsgrad herkömmlicher Siebböden einigermaßen erhöhen ohne Herabsetzung des hydraulischen Widerstandes (Druckverlustes). Zum anderen liegt der Wirkungsgrad der Streckmetallböden zwangsläufig niedriger als der moderner Siebböden, wobei auch ihr Druckverlust nur anscheinend günstiger ist.

Die Aufgabe der Erfindung besteht darin, eine Bodenkonstruktion anzubieten, deren Wirkungsgrad in einem breiten Belastungsbereich den von Ventil-, oder Ventil-Siebböden zumindest erreicht oder übertrifft, wobei ihr Druckverlust niedriger liegt, als der der letztgenannten Bodenbauarten, wobei eine geringere Gefahr der Verstopfung und des Durchregnens gegeben ist.

Eine weitere Aufgabe der Erfindung ist es, daß die Herstellungskosten der erfindungsgemäßen Konstruktion niedriger liegen sollen, als die der Ventil-, oder Ventil-Siebböden.

Die Erfindung beruht auf folgenden Feststellungen:

Der Wirkungsgrad des Trennvorganges auf Böden von Destillier- oder Absorptionskolonnen wird nicht durch die Widerstände gegen die molare Diffusion des Dampfes und/oder Gases sowie der Flüssigkeit (Dampf- oder Gasfilm und Flüssigkeitsfilm) bestimmt, sondern durch die Wirksamkeit des makroskopischen Mischvorganges auf den Böden. Nach Versuchsarbeiten geht der Stoffaustausch zwischen dem Dampf und/oder Gas sowie der Flüssigkeit (Destillation oder Absorption) größtenteils an der Berührungsstelle beider Phasen momentan vor sich. Deshalb hängt der Wirkungsgrad eines destillativen, oder absorptiven Stoffaustauschvorganges davon ab, mit welcher Geschwindigkeit die bereits mit Dampf und/oder Gas kontaktierte Flüssigkeitsmenge durch den Mischvorgang für die Flüssigkeit, die mit dem Dampf und/oder Gas noch nicht in Berührung kommen konnte, Platz schafft.

Der Mischvorgang wird auf den Böden ausschließlich durch den aufsteigenden Dampf- und/oder Gasstrom mittels Impulsübertragung vorgenommen, während durch den Flüssigkeitsstrom lediglich die mit dem Dampf und/oder Gas vollständig oder nur teilweise vermischte Flüssigkeitsmenge weitertransportiert wird.

In Bezug auf die obige Feststellung entstand der Begriff der im Fachgebiet als Durchmischungsmodell bekannten Erscheinung, bzw. der des Durchmischungsvorganges. Die Richtigkeit dieses Modells wird durch bekannte Versuchsergebnisse wie folgt bestätigt.

Weil der Mischeffekt auf den Böden laut dem Durchmischungsmodell ausschließlich durch den Dampf- und/oder Gasstrom herbeigeführt wird, soll die Strömungsrichtung des Dampfes und/oder Gases in einem V-W-Z-räumlichen Koordinatensystem untersucht werden, in dem V die Hauptrichtung der Flüssigkeitsströmung auf der Bodenebene, W die dazu senkrechte Richtung gleichfalls auf der Bodenebene und Z die zur Bodenebene senkrechte Richtung ausdrücken.

Auf modernen Siebböden strömt der Dampf und/oder das Gas – abgesehen von eventuellen geringfügigen spiralförmigen Bewegungen – ausschließlich in vertikaler Richtung. Die Impulsübertragung an die Flüssigkeit ist demzufolge nur in der Richtung Z möglich, wodurch keine Vollturbulenz in der flüssigen Phase entsteht. Deshalb liegt auch die Wirksamkeit der Flüssigkeitsdurchmischung unter 100%. Darin liegt die Erfahrung begründet, daß die Vergrößerung der Ablaufwehrhöhe – und gleichzeitig die des Flüssigkeitsniveaus – über 20 mm hinaus auf modernen Siebböden keinen wesentlichen Anstieg des Bodenwirkungsgrades mit sich bringen.

Gemäß dem Durchmischungsmodell wird die Flüssigkeit auf Schlitz-Siebböden durch den Dampf- und/oder Gasstrom nicht nur in Richtung V, sondern auch in Richtung W durch Impulsübertragung vermischt. Dies führt zur Wirkungsgraderhöhung. Das gleiche bezweckt prinzipiell auch der mittels Streckmetallsegmente beabsichtigte schiefwinkelige Dampf- und/oder Gaseintritt in die Bodenflüssigkeit. Die Flüssigkeit vermischt sich auf Böden, die aus in verschiedenen Richtungen orientierten Streckmetallsegmenten gebaut werden, in den Richtungen V und W, ferner auch infolge der auf den Dampf- und/oder Gasstrom wirkenden Auftriebskraft in Richtung Z. Da aber ein Teil des durch die Öffnungen des Streckmetalls hindurchströmenden Dampfes- und/oder Gases wegen der verhältnismäßig geringfügigen Schrägstellung der Öffnungen auch vertikal strömt, verliert der Mischeffekt in den Richtungen V und W an Wirksamkeit und die vertikale Durchmischung bleibt dominierend. Die im Vergleich zu den Siebböden erhöhte Mischwirkung führt jedoch – infolge der erwähnten Koaleszenz – zu keinem Wirkungsgradanstieg; die Mischwirkung größerer Blasen ist nämlich schlechter, als die von mehreren kleineren Blasen. Gleichzeitig kann ein Zerfall der durch die Koaleszenz entstandenen großen Blasen (Dispersion) infolge der unvollkommenen Flüssigkeitsturbulenz auf dem Boden nicht erfolgen.

Aufgrund der oben beschriebenen Feststellungen wird die gestellte Aufgabe erfindungsgemäß mittels Böden in Destillier- und/oder Absorptionskolonnen gelöst, in deren mit Zulaufwehr und – gegebenenfalls – Ablaufwehr versehener Bodenplatte sich durchgehende Löcher befinden, die dadurch gekennzeichnet sind, daß in den Löchern Ösen befestigt sind, die – hinsichtlich der Strömungsrichtung des Dampfes und/oder Gases – durchgehende Öffnungen mit einem nach innen enger werdenden Einlaßabschnitt, einem sich anschließenden, zylindrischen Mittelstück sowie in dessen Fortführung einem sich nach außen erweiternden Auslaßabschnitt aufweisen und daß die geometrische Mittelachse der durchgehenden Öffnungen bei zumindest einem Teil der Ösen mit der Oberebene der Bodenplatte einen spitzen Winkel einschließt.

Nach einer besonders vorteilhaften Ausführungsform wird der Einlaßabschnitt der Öffnungen mit schräger Mittelachse in Draufsichtprojektion durch die Wand, durch die die durchlaufende Öffnung begrenzt ist, zumindest zum überwiegenden Teil abgedeckt.

Eine vorteilhafte Ausführung des Bodens ist dadurch gekennzeichnet, daß die Ein- und Auslaßabschnitte der Ösen mit schräger Mittelachse geometrisch durch Kreiskegel gebildet werden, die in je einem Punkt des Grundkreises keine Erzeugende besitzen.

Zweckmäßig ist es ferner, wenn die Punkte auf den Grundkreisen des Ein- und Auslaßabschnittes, zu denen keine Erzeugenden angehören, auf die gleiche Vertikale, oder in ihre Nähe fallen.

Das Wesen des Ausführungsbeispieles des Bodens besteht darin, daß der durch die Achse der Ösen mit schräger Achse und durch die Oberebene der Bodenplatte eingeschlossene Winkel 45° oder nahezu 45° ist. Es ist vorteilhaft, wenn der Halbkegelwinkel des Einlaßabschnittes größer ist als der des Auslaßabschnittes, und wenn der Halbkegelwinkel des Auslaßabschnittes 3° bis 4°, vorzugsweise etwa 3,5°, beträgt. Ferner ist es vorteilhaft, wenn der Halbkegelwinkel des Einlaßabschnittes größer ist als der Halbkegelwinkel des Auslaßabschnittes.

Nach einer anderen vorteilhaften Ausführungsform befinden sich die Bodenplatte und die Oberebene der Ösen in der gleichen Ebene und es sind die Kanten der Ein- und/oder der Auslaßöffnung abgerundet.

Es ist vorteilhaft, wenn die in der Bodenplatte durchgehenden Löcher sowie die äußere Mantelfläche der Ösen mit Schraubengewinde versehen sind und die Ösen durch Gewindeverbindung in den Löchern befestigt werden.

Nach einem weiteren Ausführungsbeispiel sind solche Ösen in der Nähe des Zulaufwehrs – vorzugsweise in mehreren, zum Ablaufwehr parallelen Reihen – in der Bodenplatte eingebaut, deren schräge Mittelachsen der durchlaufenden Öffnungen in Draufsicht die gleiche oder im wesentlichen die gleiche Richtung aufweisen wie die Hauptströmungsrichtung der Flüssigkeit auf dem Boden. Ferner ist es zweckmäßig, wenn in der Bodenplatte dem Zulaufwehr gegenüber – vorzugsweise in der Nähe des Ablaufwehrs – Ösen, die jeweils eine durchlaufende Öffnung mit vertikaler geometrischer Mittelachse aufweisen, vorzugsweise in mehreren, zueinander und gegebenenfalls zum Ablaufwehr parallelen Reihen, eingebaut sind, und wenn im Mittelgebiet der Bodenplatte Ösen mit unterschiedlicher Orientierung eingebaut sind, und schließlich, wenn sich im Randgebiet der Bodenplatte Ösen befinden, durch deren Orientierung die Flüssigkeit in das Bodeninnere gelenkt wird.

Vorzugsweise beträgt der Durchmesser des zylindrischen Mittelstückes der durchlaufenden Öffnung 5 bis 80 mm.

Die Erfindung wird im folgenden anhand der beigefügten Figuren eingehend erläutert, durch die vorteilhafte Ausführungsbeispiele der Böden, bzw. der in den Böden eingebauten Ösen dargestellt werden.

Es zeigen:

Fig. 1 einen einflutigen Querstromboden gemäß der Erfindung in skizzenhafter Draufsicht;

Fig. 2 einen Zentrifugalboden in erfindungsgemäßer Auslegung, gleichfalls in skizzenhafter Draufsicht;

Fig. 3 eine Öse mit schräger Durchlauföffnung in vertikalem Achsenschnitt;

Fig. 4 die Draufsicht der Durchlauföffnung einer Öse ähnlich der in der Fig. 3;

Fig. 5 die Hälfte der Öse laut Fig. 3 und Fig. 4 in perspektivischer Sicht und

Fig. 6 in vertikalem Schnitt eine Öse, die eine Öffnung mit vertikaler Mittelachse besitzt.

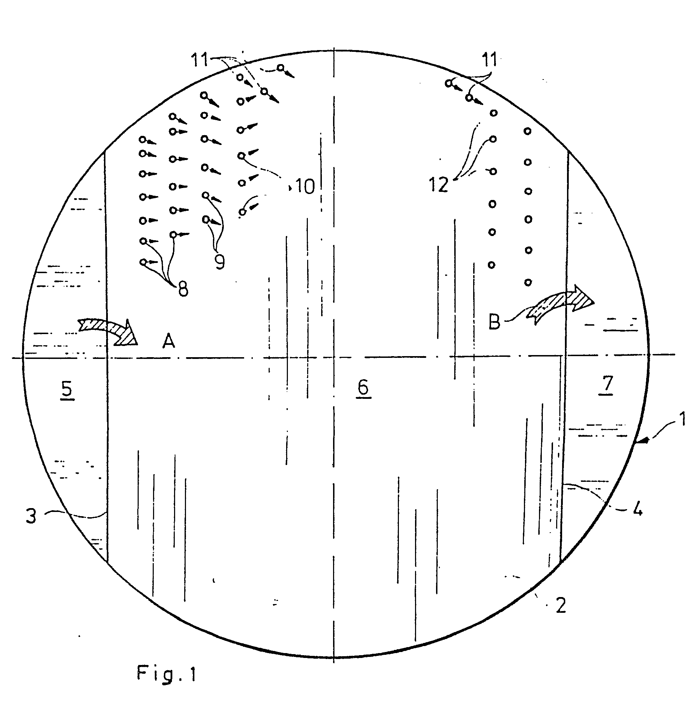

Der in Fig. 1 in skizzenhafter Draufsicht dargestellte Boden 1 weist eine Bodenplatte 2 auf, die sich an ihrem Umfang abgedichtet, oder im wesentlichen abgedichtet, gegen die innere Fläche des (nicht dargestellten) Kolonnenmantels abstützt.

Der Boden 1 hat ein – an sich bekanntes – Zulaufwehr 3 und ein Ablaufwehr 4, die je aus beispielsweise etwa 20 mm hohem Blech gebildet werden. Die Richtung des Flüssigkeitszulaufes wurde mit A, die des Flüssigkeitsablaufes dagegen mit B bezeichnet. Die Plattenteile, durch die das Zulaufsegment 5 (links vom Zulaufwehr 3) sowie das Ablaufsegment 7 (rechts vom Ablaufwehr 4) gebildet werden, besitzen keine Öffnungen. Demgegenüber enthält der Plattenteil 6 zwischen den Wehren 3 und 4 Ösen mit verschiedenartig orientierten Öffnungen 8, 9, 10, 11 und 12, die z.B. an den Eckpunkten gleichseitiger Dreiecke oder Vierecke, gegebenenfalls in gemischter Teilung angesetzt sind. Bevor auf die Art und den Zweck der Orientierung eingegangen wird; sei eine vorteilhafte Möglichkeit der Ösenkonstruktion dargelegt.

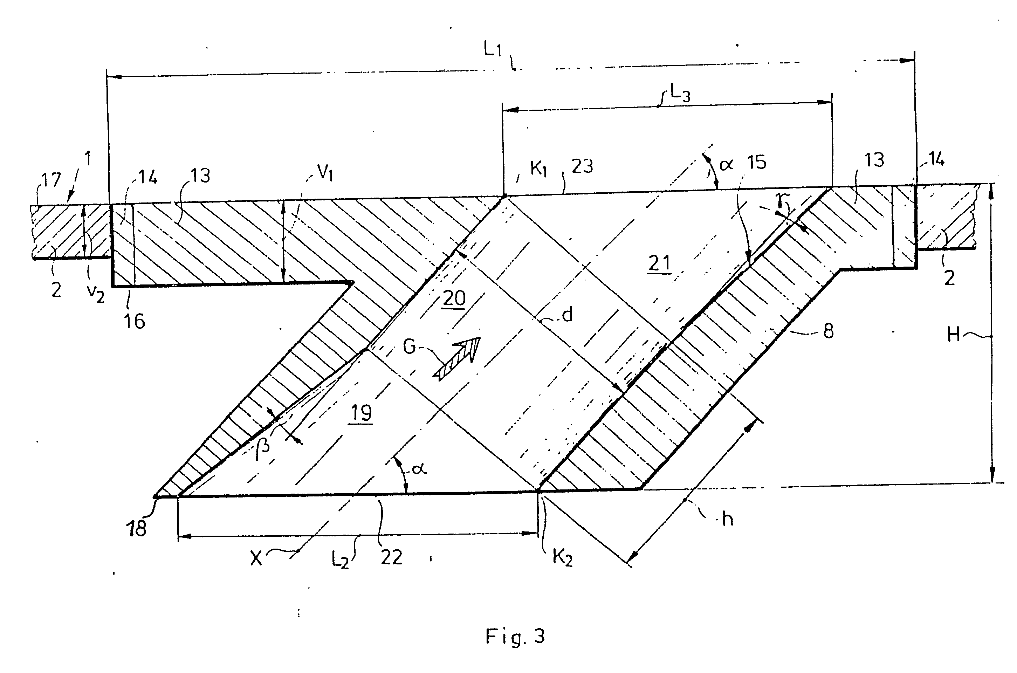

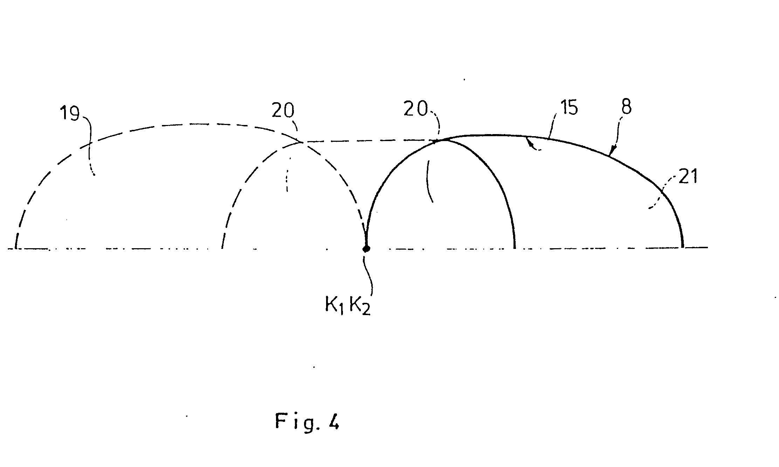

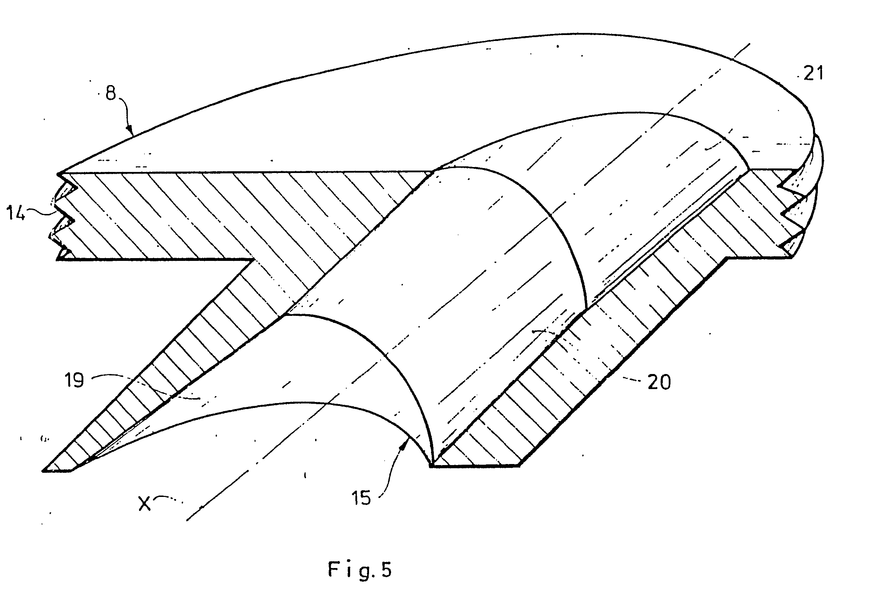

Die in den Fig. 3–5 gezeigte, mit der Bezugsnummer 8 als ein Ganzes bezeichnete, in dem vorliegenden Fall Metallöse kann durch Präzisionsguß, oder auch auf andere Art z.B. durch Drehen hergestellt werden. Die Öse 8 hat einen kreisrunden Flansch 13 mit der Stärke $V_1$. Die Umfangsfläche ist mit einem Gewinde 14 versehen und ist in eine mit Gewinde 16 versehene, kreisförmige Bohrung eingeschraubt. Die Bohrung weist die Stärke $V_2$ auf und ist senkrecht zur Bodenplattebene geführt (s. den linken Teil der Fig. 3). Die Befestigung kann jedoch durch Kleben, Schweißen oder auch in einer anderen Weise erfolgen. Die geometrische Mittelachse X der im Ganzen mit der Bezugsnummer 15 bezeichneten Durchlauföffnung der Öse 8 schließt mit der Oberebene 17 der Bodenplatte 2 bzw. mit der Unterebene 18 der Öse 8 den Winkel α ein. Dieser ist ein spitzer Winkel, dessen Wert vorzugsweise ca. 45° ist. Die Durchlauföffnung 15 gliedert sich in drei Abschnitte 19, 20, 21. Der mittlere Abschnitt 20 ist zylindrisch, sein Durchmesser d bleibt in der ganzen Länge h konstant. Dem unteren Ende des zylindrischen Mittelstückes 20 schließt sich der nach außen – nach unten – sich erweiternde, konische Einlaßabschnitt 19 an, während sein oberes Ende in den nach außen – nach oben – sich erweiternden Auslaßabschnitt 21 übergeht. Die drei Abschnitte 19, 20, 21 haben natürlich eine gemeinsame geometrische Mittelachse X. Sowohl der Einlaßabschnitt 19, als auch der Auslaßabschnitt 21 werden in geometrisch vorteilhafter Weise durch einen Kreiskegel mit schräger Achse gebildet, der ausgehend von einem, auf dem Grundkreis liegenden $K_1$ bzw. $K_2$ Punkt keine Erzeugende aufweist. In dem Ausführungsbeispiel nach Fig. 4 fallen der Punkt $K_1$ des Auslaßabschnittes 21 sowie der Punkt $K_2$ des Einlaßabschnittes 19 auf die gleiche Vertikale. Dies bedeutet, daß es von oben, bzw. unten gesehen keine freie Öffnungsoberfläche gibt, daß die untere Einlaßöffnung 22 in ihrem ganzen Querschnitt abgedeckt ist. Infolgedessen sind die aufwärts strömenden Dämpfe und/oder Gase in ihrer ganzen Masse dazu gezwungen in Richtung X schräg auszuströmen. Es gibt auch keinen vertikal aufwärts gerichteten Teilstrom. Der Halbkegelwinkel des Einlaßabschnittes β ist zweckmäßigerweise größer, als der Halbkegelwinkel der Auslaßöffnung γ.

Wie in den Fig. 3–5 ersichtlich, wird die im Ganzen mit der Bezugsnummer 15 bezeichnete Durchlauföffnung, die drei Abschnitte 19, 20, 21 enthält, venturiartig ausgestaltet, da der Einlaßabschnitt 19 – bezüglich der Richtung G der Dampf- und/oder Gasströmung – in Richtung des zylindrischen Mittelstückes 20 mit dem konstanten Durchmesser d (nach innen) enger wird, während der Auslaßabschnitt 21 sich vom Mittelstück 20 ausgehend (nach außen) erweitert. Der Halbkegelwinkel des Auslaßes γ (Fig. 3) soll zweckmäßigerweise so gewählt werden, daß das Maß $L_3$ der Auslaßöffnung 23 max. 1,5 d gleichkommt. Die Ebene der Auslaßöffnung 23 der Öse 8 fällt mit der Ebene 17 der Bodenplatte 2 zusammen, wodurch kein Flüssigkeitsstau entsteht. Die venturiartige Gestalt der Durchlauföffnung 15 führt zu optimalen Strömungsverhältnissen. Der hydraulische Widerstand kann durch die Abrundung der Kanten der Einlaßöffnung 22 sowie der Auslaßöffnung 23 weiterhin vermindert werden.

Die Ausbildung der Ösen 9–11 nach Fig. 1 kann mit der Öse 8 in den Fig. 3–6 vollkommen identisch sein. Der Werkstoff der Ösen soll unter Berücksichtigung der Korrosionsbedingungen gewählt werden; es können Metalle, verschiedene Stähle, Glas sowie Kunststoffe in Frage kommen.

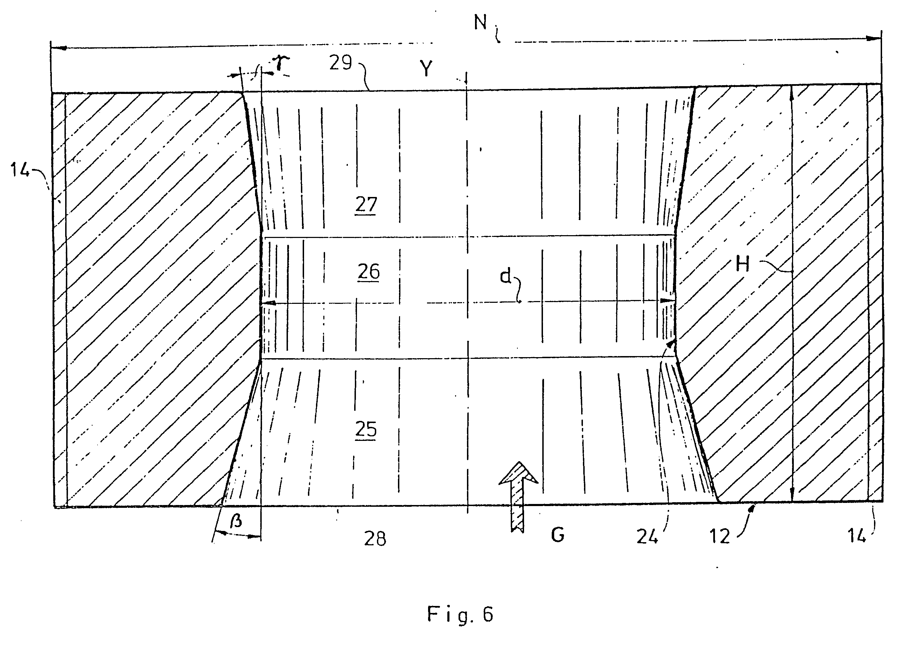

Die Ösen 12 in der Fig. 1 haben dagegen eine vertikale geometrische Mittelachse. Eine derartige Öse wird durch Fig. 6 eingehend veranschaulicht und zwar in vertikalem Achsenschnitt größeren Maßstabes. Die geometrische Mittelachse Y der Durchlauföffnung 24 ist zugleich die Symmetrieachse der Öse. Auch in diesem Falle besteht die Durchlauföffnung 24 aus drei Abschnitten: aus dem – bezüglich der mit dem Pfeil G bezeichneten Strömungsrichtung des Dampfes und/oder des Gases – nach innen enger werdenden Einlaßabschnitt 25 aus dem Mittelstück 26 mit konstantem Durchmesser d, sowie aus dem sich nach außen konisch erweiternden Auslaßabschnitt 27. Der Halbkegelwinkel β des senkrecht stehenden Einlaßabschnittes 25 mit Kreiskegelquerschnitt ist größer als der Halbkegelwinkel γ des Auslaßabschnittes 27. An der äußeren Mantelfläche der im Ganzen zum zylindrischen Körper ausgebildeten Öse 12 befindet sich das Gewinde 14. Die Kanten der Einlaßöffnung 28 und der Auslaßöffnung 29 sind auch in diesem Falle zweckmäßigerweise abgerundet.

In der Fig. 1, in der der besseren Übersicht halber nur ein Teil der Ösen dargestellt wurde, sieht man, daß die Ösen 8 in dem an dem Zulaufwehr 3 direkt angrenzenden Bereich derart angeordnet sind, daß die Draufsichtprojektion der schrägen geometrischen Mittelachsen ihrer Öffnungen senkrecht zur Projektion des Zulaufwehrs 3 steht. Dies wird durch die Pfeile gut veranschaulicht. Solche Ösen werden in dem Ausführungsbeispiel in zwei, zum Zulaufwehr 3 parallelen Reihen angesetzt; die Anzahl der Reihen hängt jedoch vom Dampf- und/oder Gasdurchsatz sowie vom Flüssigkeitsdurchsatz (m³/h) ab. Darauffolgend werden reihenweise unterschiedlich orientierte Ösen 9, 10 in die Bodenplatte montiert, deren Orientierungen durch die Pfeile gut wiedergegeben sind; die geometrischen Achsen der Öffnungen schließen in Draufsichtprojektion Winkel entgegengesetzter Richtung mit der Projektion der Mittelachsen der Ösen 8 ein. Im Randgebiet des Bodens 1 sind – hinsichtlich der Hauptströmungsrichtung der Flüssigkeit – nach vorne und etwas in das Bodeninnere gerichtete Ösen 11 angesetzt. Schließlich werden im Bodenteil vor dem Ablaufwehr 4 Ösen 12 mit vertikaler geometrischer Achse in zwei zum Wehr parallelen Reihen eingebaut; zu diesen wurden sinngemäß keine Pfeile gezeichnet.

Die über das Zulaufwehr 3 auf den Plattenteil 6 hinüberfließende Flüssigkeit gelangt nach dem Pfeil A in den Bereich der Ösen 8. Die Ösen 8 sind derart orientiert, daß die Flüssigkeit infolge des durch die Ösen hindurchströmenden Dampfes und/oder Gases – über Impulsaustausch in Richtung des Ablaufwehres 4, also der Hauptströmungsrichtung entsprechend weitertransportiert wird. Infolgedessen wird die Gefahr kleiner, bzw. hört auf, daß die dem Plattenteil 6 schaumfrei zu fließende Flüssigkeit nach unten durchregnet. Gleichzeitig nimmt auch der Belastungsbereich des Dampfes und/oder Gases zu. Die Flüssigkeit wird aus dem Randgebiet der Bodenplatte durch die Dampf- und/oder Gasströme, die durch die Ösen 11 hindurchtreten, in das Bodeninnere, bzw. in Richtung des Ablaufwehrs 4 gelenkt. Vor dem Ablaufwehr 4 befinden sich Ösen 12 mit vertikaler Orientierung. Durch den durch die Ösen im wesentlichen vertikal aufsteigenden Dampf- und/oder Gasstrom wird die Flüssigkeit daran gehindert, über das Ablaufwehr 4 unregelmäßig hinüberzufließen («hinüberzuschießen»).

In dem mittleren Gebiet des Bodenteils 6 weisen die Ösen 9 und 10 reihenweise wechselnde Orientierungen auf; diese Richtungen schließen miteinander reihenweise einen rechten Winkel ein, wodurch die durch diese hindurchtretenden Dampf- und/oder Gasströme einen intensiven Rühreffekt bewirken.

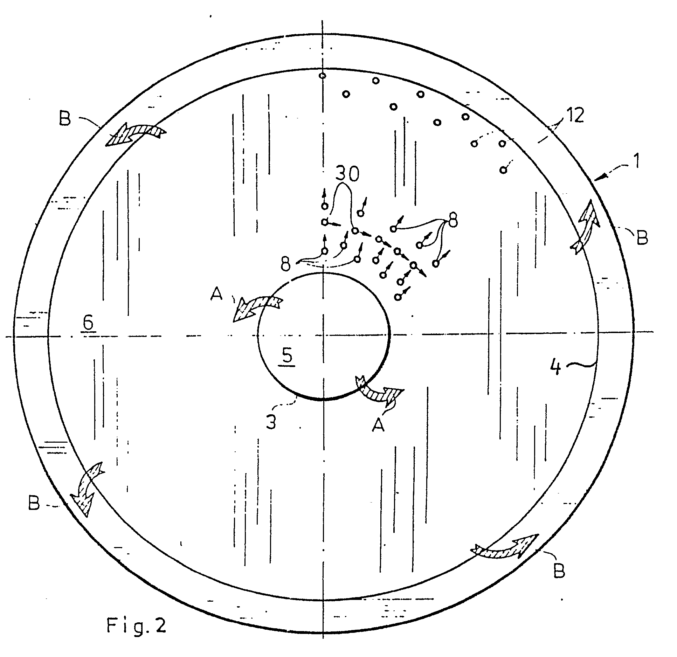

Die Fig. 2 stellt einen Zentrifugalboden dar, um dessen Mittelpunkt herum das Zulaufwehr 3, und in dessen Randgebiet das Ablaufwehr 4 angebaut werden. Beide Wehre sind in Draufsicht kreisförmig. Die gleichen, bzw. gleichartigen Konstruktionsteile wurden mit den in Fig. 1 angewendeten Bezugsnummern bezeichnet. Die Flüssigkeit gelangt gemäß den Pfeilen A durch Überströmen auf den kreisringförmigen Plattenteil 6, in dem im Zulaufwehr 3 angrenzenden Bereich Ösen mit schräger Achse 8 in zwei parallelen Reihen angeordnet werden (Fig. 3–6), die radial orientiert sind. Die in der nächsten Reihe eingebauten Ösen 30 mit gleichfalls schräger Achse weisen eine – in der gleichen Richtung – tangentiale Orientierung auf. Danach sind Reihen aus radial und tangential orientierten Ösen 8, 30 bis zum Randgebiet des Plattenteiles 6 wechselnd vorgesehen. Schließlich befinden sich Ösen 12, die Öffnungen mit vertikaler geometrischer Mittelachse enthalten (Fig. 6) im Randgebiet unmittelbar am Ablaufwehr 4; auch davon ist nur ein Teil der besseren Übersicht halber in Fig. 2 dargestellt.

Dem Durchregnen der dem Boden gemäß Fig. 2 zufließenden schaumfreien Flüssigkeit wird durch die aus den um das Zulaufwehr 3 herum eingebauten Ösen 8 austretenden Dampf- und/oder Gasströme entgegengetreten. Der aus der wechselnd radial und tangential orientierten Ösen austretende Dampf- und/oder Gasstrom bewirkt im mittleren Gebiet des Bodenteiles 6 einen intensiven Rühreffekt.

Wenn das Zulaufwehr und das Ablaufwehr auf dem Zentrifugalboden gemäß Fig. 2 umgetauscht werden, – wenn nämlich die Flüssigkeitsströmung von außen nach innen gerichtet ist – so tauscht sich sinngemäß auch die Anordnung der Ösen 8, 12 um.

Weil die Befestigung der Böden in dem Kolonnenmantel (Lagerung, Einschweißen, Einschrauben, usw.) dem Fachmann bekannt ist, beinhalten die Figuren diese nicht; aus demselben Grund wurden auch die möglichen technischen Lösungen des Zu- und des Ablaufwehrs nicht dargelegt.

Folgende Vorteile verbinden sich mit der Erfindung:

Aus verfahrenstechnischer Sicht ist die Erfindung vorteilhaft, da der hydraulische Widerstand gegen den Dampf- und/oder Gasstrom, infolge der venturiartigen Gestalt der Durchlauföffnungen der Ösen herabgesetzt wird. In der Bodenmitte sind immer in verschiedene Richtungen orientierte Ösen eingebaut; durch ihre Schrägstellung kann keine vertikale Dampf- und/oder Gasströmung entstehen. Die gleichen Ösen führen auf der V-W Ebene des Raumes zu einer fast vollständigen Durchmischung, wobei auch der infolge der Flüssigkeitsreibung sonst entstehende hydraulische Gradient behoben wird. Somit kann die Durchmischung in der vertikalen Raumrichtung (Z), die infolge der auf die Dampf- und/oder Gasblasen wirkenden Auftriebskraft durch den an die Flüssigkeit übertragenen Impuls hervorgerufen wird, von abgeschwächter Bedeutung sein. In manchen Fällen kann das Ablaufwehr wegen der vollständigen Durchmischung weggelassen werden. Dadurch kann der hydraulische Gesamtwiderstand des Bodens (Druckverlust) auf einem niedrigeren Wert als bei Ventil-, oder Ventil-Siebböden gehalten werden. Gleichzeitig wird ein größerer Wirkungsgrad als bei diesen, beinahe ein 100%iger Wirkungsgrad, gewährleistet. Durch die in der Bodenmitte eingebauten, wechselnd orientierten Ösen wird der Gefahr eines nur teilweisen Arbeitens des Bodens entgegengewirkt und es wird auch die Rückvermischung der Flüssigkeit verhindert. Durch die in der Nähe des Zulaufes eingebauten Ösen, die in Richtung der Hauptströmung der Flüssigkeit orientiert sind, wird der Belastungsbereich des Dampfes und/oder Gases erhöht.

Aus betriebstechnischer Sicht weist der erfindungsgemäße Boden in mehreren Beziehungen Vorteile auf: in der Nähe des Zulaufes läßt die Gefahr des Durchregnens nach, wodurch sonst eine Verschlechterung des Wirkungsgrades auftreten würe; durch die venturiartige Gestalt der Durchlauföffnungen der Ösen wird einerseits die Verschmutzungs- und Verstopfungsgefahr auf ein Minimum reduziert, zum anderen können die sich über längere Zeit eventuell abgesetzten Schmutzstoffe aus den Ösen leicht entfernt werden; die Ösen deformieren sich unter Wärmeeinfluß nicht, deshalb bleiben ihre vorteilhaften Eigenschaften auch nach längeren Betriebszeiten unverändert. Auf dem Boden gibt es – im Gegensatz zu dem Ventilboden – keine beweglichen, verschleißbaren Konstruktionselemente, wodurch die Betriebssicherheit erhöht wird.

Auch kostenmäßig liegt der erfindungsgemäße Boden günstig: der Materialaufwand der Ösen bleibt unter dem der Ventile von bekannten Ventilböden. Der weitere Teil der Herstellungskosten der Ösen ist bei vergleichbarem Mechanisierungsgrad kleiner – höchstens gleich – als der Kostenaufwand der Ventile. Der Herstellungsaufwand der Bohrungen ohne Gewinde, in denen die Ösen eingebaut werden, ist praktisch den Herstellungskosten der scharfkantigen Ventilbohrungen gleich. Die Anfertigung der gegebenenfalls mit Gewinde versehenen Bohrungen ist billiger als z. B. die Ausbildung der Ventilbohrungen der Firma Koch. Auch das Einmontieren der Ösen in die Bodenplatte erfordert einen geringeren Kostenaufwand, als das Einbauen der Ventile in die Bodenplatte.

Sowohl die Bodenplatte als auch die Ösen können aus verschiedenen Werkstoffen, z.B. aus Metallen, aus verschiedenen Stählen, aus Kunststoffen, aus Glas, usw. hergestellt werden.

Die erfindungsgemäßen Böden können als einflutige, oder mehrflutige Querstrom- oder Zentrifugalböden ausgebildet werden.

Die Erfindung erstreckt sich natürlich nicht auf die oben dargelegten Ausführungsbeispiele, sondern sie kann innerhalb des durch die Ansprüche definierten Patentschutzes auf zahlreiche Arten verwirklicht werden.

**Patentansprüche**

1. Boden für Destillier- und/oder Absorptionskolonnen, in dessen mit einem Zu- und gegebenenfalls Ablaufwehr versehener Bodenplatte sich durchgehende Löcher befinden, dadurch gekennzeichnet, daß in den Löchern Ösen (8–12, 30) befestigt sind, die – hinsichtlich der Strömungsrichtung des Dampfes und/oder des Gases – durchgehende Öffnungen (15, 24) mit einem nach innen enger werdenden Einlaßabschnitt (19; 25), einem sich anschließenden zylindrischen Mittelstück (20;26) sowie in dessen Fortführung einem sich nach außen erweiternden Auslaßabschnitt (21; 27) aufweisen und daß die geometrische Mittelachse (X, Y) der durchgehenden Öffnungen (15; 24) bei zumindest einem Teil der Ösen (8–12; 30) mit der Oberebene der Bodenplatte einen spitzen Winkel (α) einschließt.

2. Boden nach Anspruch 1, dadurch gekennzeichnet, daß der Einlaßabschnitt (19) der Öffnungen mit schräger Mittelachse (X) in Draufsichtprojektion durch die Wand, durch die die durchlaufende Öffnung (15) begrenzt ist, zumindest zum überwiegenden Teil abgedeckt wird.

3. Boden nach Anspruch 1 oder 2, dadurch gekennzeichnet, daß der Einlaßabschnitt (19) und der Auslaßabschnitt (21) der Ösen-Öffnungen (15) mit schräger Mittelachse (X) geometrisch durch Kreiskegel gebildet werden, die in je einem Punkt des Grundkreises ($K_1$; $K_2$) keine Erzeugende besitzen.

4. Boden nach Anspruch 3, dadurch gekennzeichnet, daß die Punkte auf den Grundkreisen ($K_1$; $K_2$) des Ein- und Auslaßabschnittes (19; 21) die jeweils keine Erzeugende aufweisen, auf die gleiche Vertikale oder in deren Nähe fallen.

5. Boden nach einem der Ansprüche 1 bis 4, dadurch gekennzeichnet, daß der durch die Achse der Ösen mit schräger Achse (8–11; 30) und durch die Oberebene der Bodenplatte (2) eingeschlossene Winkel 45° oder nahezu 45° ist.

6. Boden nach einem der Ansprüche 1 bis 5, dadurch gekennzeichnet, daß der Halbkegelwinkel (β) des Einlaßabschnittes (19; 25) größer ist als der Halbkegelwinkel (γ) des Auslaßabschnittes (21; 27).

7. Boden nach einem der Ansprüche 1 bis 6, dadurch gekennzeichnet, daß der Halbkegelwinkel (β) des Einlaßabschnittes zwischen 9,5° und 10,5°, vorzugsweise bei etwa 10°, liegt.

8. Boden nach einem der Ansprüche 1 bis 7, dadurch gekennzeichnet, daß der Halbkegelwinkel des Auslaßabschnittes (21; 27) 3° bis 4°, vorzugsweise etwa 3,5°, beträgt.

9. Boden nach einem der Ansprüche 1 bis 8, dadurch gekennzeichnet, daß sich die Bodenplatte (2) und die Oberebene der Ösen (8–12; 30) auf der gleichen Ebene befinden.

10. Boden nach einem der Ansprüche 1 bis 9, dadurch gekennzeichnet, daß die Kanten der Einlaßöffnung (22; 28) und/oder der Auslaßöffnung (23; 29) abgerundet sind.

11. Boden nach einem der Ansprüche 1 bis 10, dadurch gekennzeichnet, daß die in der Bodenplatte (2) durchgehenden Löcher sowie die äußere Mantelfläche der Ösen (8–12; 30) mit Schraubengewinde (14) versehen sind, und daß die Ösen (8–12; 30) durch Gewindeverbindung in den Löchern befestigt sind.

12. Boden nach einem der Ansprüche 1 bis 11, dadurch gekennzeichnet, daß in der Nähe des Zulaufwehrs (3) vorzugsweise in mehreren, zu dem Ablaufwehr parallelen Reihen, Ösen (8) in der Bodenplatte (2) eingebaut sind, deren schräge Mittelachsen (X) der durchgehenden Öffnungen (15) in Draufsicht die gleiche oder im wesentlichen die gleiche Richtung aufweisen wie die Hauptströmungsrichtung der Flüssigkeit auf dem Boden (1).

13. Boden nach einem der Ansprüche 1 bis 12, dadurch gekennzeichnet, daß in der Bodenplatte (2) dem Zulaufwehr (3) gegenüber, vorzugsweise in der Nähe des Ablaufwehrs (4), Ösen (12), die jeweils eine durchlaufende Öffnung (24) mit vertikaler geometrischer Mittelachse (Y) aufweisen, vorzugsweise in mehreren, zueinander und ggf.

zum Ablaufwehr (4) parallelen Reihen, eingebaut sind.

14. Boden nach einem der Ansprüche 1 bis 13, dadurch gekennzeichnet, daß im Mittelbereich der Bodenplatte (2) Ösen (9; 10; 30; 8) mit unterschiedlicher Orientierung eingebaut sind.

15. Boden nach einem der Ansprüche 1 bis 14, dadurch gekennzeichnet, daß im Randgebiet der Bodenplatte (2) Ösen (11) eingebaut sind, durch deren Orientierung die Flüssigkeit zur Mitte des Bodens (1) gelenkt wird.

16. Boden nach einem der Ansprüche 1 bis 15, dadurch gekennzeichnet, daß der Durchmesser (d) des zylindrischen Mittelstückes (20; 26) der durchlaufenden Öffnung (15; 24) 5 bis 80 mm beträgt.

**Claims**

1. Tray for destillation and/or absorbation columns comprising a bottom plate having through holes and provided with an inlet weir and if necessary with an outlet weir, characterized in that in said eyes (8–12, 30) are attached in that through holes having – in regard of the direction of flow of the vapour and/or of the gas – continuous apertures (15, 24) with an inlet portion (19; 25) becoming closer towards the interior, a connected center portion (20; 26) as well as an outlet portion (21, 27) in continuation of the center portion becoming wider towards the exterior and in that the geometric centre axis (X, Y) of said through holes (15; 24) of at least a part of said eyes (8–12; 30) is at an acute angle ($\alpha$) with the upper side of said bottom plate.

2. Tray according to claim 1, characterized in that said inlet portion (19) of said apertures having an inclined centre axis (X) is when viewed in top view, covered at the main part by said wall through which the continuous aperture (15) is defined.

3. Tray according to claim 1 or 2, characterized in that said inlet portion (19) and said outlet portion (21) of said eye apertures (15) having said inclined centre axis (X) geometrically are formed by circular cores having no generatrix in each of one point of the base circle ($K_1$; $K_2$).

4. Tray according to claim 3, characterized in that the points on the base circles ($K_1$; $K_2$) of said inlet portion and said outlet portion (19; 21) having in each case no generatrix fall on the same vertical line or in vicinity thereof.

5. Tray according to anyone of claims 1 to 4, characterized in that the angle between the axis of said eyes with inclined axis (8–11; 30) and said upper side of said bottom plate (2) is 45° or almost 45°.

6. Tray according to anyone of claims 1 to 5, characterized in that the semicone angle ($\beta$) of said inlet portion (19; 25) is greater than the semicone angle ($\gamma$) of said outlet portion (21; 27).

7. Tray according to anyone of claims 1 to 6, characterized in that the semicone angle ($\beta$) of said inlet portion is between 9.5° and 10.5°, preferably about 10°.

8. Tray according to anyone of claims 1 to 7, characterized in that the semicone angle of said outlet portion (21; 27) is 3° to 4°, preferably about 3.5°.

9. Tray according to anyone of claims 1 to 8, characterized in that said bottom plate (2) and the upper side of said eyes (8–12; 30) are lying at the same level.

10. Tray according to anyone of claims 1 to 9, characterized in that the edges of the inlet aperture (22; 28) and/or of the outlet aperture (23; 29) are rounded.

11. Tray according to anyone of claims 1 to 10, characterized in that the through holes in the bottom plate (2) as well as the outer surface area of said eyes (8–12; 30) are provided with screw threads (14) and that said eyes (8–12; 30) are attached in said holes by screwing.

12. Tray according to anyone of claims 1 to 11, characterized in that in vicinity of said inlet weir (3) eyes (8) are inserted into said bottom plate (2) preferably in several rows parallel to said outlet weir, wherein the inclined centre axes (X) of the continuous apertures (15) of the eyes when viewed in top view have the same or essentially the same direction as the main flow direction of the fluid on the tray (1).

13. Tray according to anyone of claims 1 to 12, characterized in that in said bottom plate (2) opposite to said inlet weir (3), preferably in vicinity of said outlet weir (4), eyes (12) in each case having a continuous aperture (24) with a vertical geometrical centre axis (Y) are inserted, preferably in several rows being parallel to each other and if necessary to said outlet weir (4).

14. Tray according to anyone of claims 1 to 13, characterized in that in the centre portion of said bottom plate (2) eyes (9; 10; 30; 8) having different orientation are inserted.

15. Tray according to anyone of claims 1 to 14, characterized in that in the edge portion of the bottom plate (2) eyes (11) are inserted being orientated so that the fluid is directed to the centre of the tray (1).

16. Tray according to anyone of claims 1 to 15, characterized in that the diameter (d) of the cylindrical centre portion (20; 26) of the continuous aperture (15; 24) is 5 to 80 mm.

**Revendications**

1. Fond pour colonnes de distillation et/ou d'absorption comportant une plaque de fond qui possède un barrage mobile d'admission et le cas échéant un barrage mobile de déversement est pourvue de trous traversants, caractérisé en ce que des œillets (8–12, 30) sont fixés dans les trous qui présentent – dans la direction du flux de la vapeur et/ou du gaz – des ouvertures (15, 24) traversantes avec une partie d'admission (19; 25) se rétrécissant vers l'intérieur, une partie médiane (20; 26) successive cylindrique, ainsi que dans la continuation de celle-ci, une section de sortie (21; 27) s'évasant vers l'extérieur et que l'axe central (X, Y) des ouvertures (15; 24) traversantes renferment avec le plan supérieur de la plaque de fond un angle aigu (α) pour au moins une partie des œilletts (8–12, 30).

2. Fond selon la revendication 1, caractérisé en ce que la section d'admission (19) des ouvertures, ayant un axe central oblique (X) en projection vue d'en haut à travers la paroi par laquelle l'ouverture (15) traversantes est limitée, est au moins recouverte dans sa majeure partie.

3. Fond selon les revendications 1 ou 2, caractérisé en ce que la section d'admission (19) et la section de sortie (21) des ouvertures à œillet (15) ayant un axe central oblique, sont géométriquement parlant formés par des cônes de révolution qui ne possède pas chacun de génératrice dans un point du cercle de base ($K_1$, $K_2$).

4. Fond selon la revendication 3, caractérisé en ce que les points sur les cercles de base ($K_1$; $K_2$) des sections d'admission et de sortie (19; 21) qui ne présentent pas de génératrice coïncident avec la même verticale ou à proximité de celle-ci.

5. Fond selon l'une des revendications 1 à 4, caractérisé en ce que l'angle défini par les axes des œillets ayant un axe oblique (8–11; 30) et le plan supérieur de la plaque de fond (2) est de 45° ou presque 45°.

6. Fond selon l'une des revendications 1 à 5, caractérisé en ce que l'angle du demi-cône (β) de la section d'admission (19; 25) est plus grand que l'angle du demi-cône (γ) de la section de sortie (21; 27).

7. Fond selon l'une des revendications 1 à 6, caractérisé en ce que l'angle du demi-cône (β) de la section d'admission se situe entre 9,5° et 10,5°, de préférence à 10° environ.

8. Fond selon l'une des revendications 1 à 7, caractérisé en ce que l'angle du demi-cône de la section de sortie (21; 27) est de 3 à 4°, de préférence de 3,5° environ.

9. Fond selon l'une des revendications 1 à 8, caractérisé en ce que la plaque de fond (2) et le plan supérieur des œillets (8–12; 30) se trouvent sur le même plan.

10. Fond selon l'une des revendications 1 à 9, caractérisé en ce que les bords de l'ouverture d'admission (22; 28) et/ou de l'ouverture de sortie (23; 29) sont arrondis.

11. Fond selon l'une des revendications 1 à 10, caractérisé en ce que les trous traversants, ainsi que l'enveloppe extérieure des œillets (8–12; 30) de la plaque de fond (2) sont pourvus de filets (14) et que les œillets (8–12; 30) sont fixés par raccord fileté dans les trous.

12. Fond selon l'une des revendications 1 à 11, caractérisé en ce qu'à proximité du barrage d'admission (3) des œillets (8) sont incorporés dans la plaque de fond (2) qui sont disposés de préférence en plusieurs rangées parallèlement au barrage de déversement, dont les axes obliques (X) des ouvertures traversantes (15) présentent vues d'en haut une direction identique ou substantiellement identique à la direction du flux principal du liquide sur le fond (1).

13. Fond selon l'une des revendications 1 à 12, caractérisé en ce que des œillets (12) qui présentent chacun une ouverture traversantes (24) ayant un axe central géométrique vertical (Y) sont disposés en face du barrage d'admission (3) dans la plaque de fond (2) de préférence voisins du barrage de déversement (4) et en plusieurs rangées parallèles réciproquement et le cas échéant par rapport au barrage de déversement (4).

14. Fond selon l'une des revendications 1 à 13, caractérisé en ce que dans la zone médiane de la plaque de fond (2) des œillets (9; 10; 30; 8) d'orientations diverses sont incorporés.

15. Fond selon l'une des revendications 1 à 14, caractérisé en ce que dans la zone marginale de la plaque de fond (2) des œillets (11) sont incorporés par l'orientation desquelles le liquide est dirigé vers le milieu du fond (1).

16. Fond selon l'une des revendications 1 à 15, caractérisé en ce que le diamètre (d) de la partie médiane (20; 26) cylindrique de l'ouverture traversante (15; 24) est de 5 à 80 mm.

Fig.1

Fig. 2

Fig. 3

Fig. 4

Fig. 5

EP 0 111 941 B1

Fig. 6

EP 0 111 941 B1